(19) Europäisches Patentamt
European Patent Office
Office européen des brevets

(11) **EP 4 648 375 A1**

(12) **EUROPEAN PATENT APPLICATION**
published in accordance with Art. 153(4) EPC

(43) Date of publication:
**12.11.2025 Bulletin 2025/46**

(21) Application number: **23916773.7**

(22) Date of filing: **19.01.2023**

(51) International Patent Classification (IPC):
**H04L 41/16** *(2022.01)*

(52) Cooperative Patent Classification (CPC):
**H04L 41/16**

(86) International application number:
**PCT/CN2023/073095**

(87) International publication number:
**WO 2024/152290 (25.07.2024 Gazette 2024/30)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(71) Applicant: **Huawei Technologies Co., Ltd.**
**Shenzhen, Guangdong 518129 (CN)**

(72) Inventors:
• LIU, Yijing
  Chengdu, Sichuan 611731 (CN)
• FENG, Gang
  Chengdu, Sichuan 611731 (CN)
• WANG, Fei
  Shenzhen, Guangdong 518129 (CN)
• PENG, Chenghui
  Shenzhen, Guangdong 518129 (CN)

(74) Representative: **Gill Jennings & Every LLP**
**The Broadgate Tower**
**20 Primrose Street**
**London EC2A 2ES (GB)**

(54) **NETWORK QUANTIZATION METHOD AND APPARATUS, AND RELATED DEVICE**

(57) This application provides a network quantization method and apparatus, and a related device. A first device receives a first model and a first KL divergence in $t^{th}$ aggregation from a second device. The first device determines a second model in $(t + 1)^{th}$ update and quantization based on the first model and the first KL divergence in the $t^{th}$ aggregation, and sends the second model in the $(t + 1)^{th}$ update and quantization to the second device. It can be learned that the first device may update a quantized local model (namely, the second model) based on global aggregation information/a model (namely, the first model and the first KL divergence). Because global knowledge is integrated, the first device can implement faster convergence when updating the quantized local model, to improve training efficiency. In addition, even if quantization causes a specific accuracy loss, this method still implements good learning performance, can meet an accuracy requirement for a local model, and helps reduce consumption of transmission bandwidth.

FIG. 3

**Description**

**TECHNICAL FIELD**

This application relates to the field of communication technologies, and in particular, to a network quantization method and apparatus, and a related device.

**BACKGROUND**

In recent years, to promote development of an intelligent wireless network in an upcoming B5G/6G era, scholars in academia and industry have carried out a lot of research work in developing collaborative learning for efficient communication and a heterogeneous model-based collaborative learning algorithm. Quantization is a potential method. For example, a convergence speed is guaranteed through a double quantization solution, and communication costs are reduced through model parameter and gradient quantization. A lossy collaborative learning algorithm may also be introduced by quantizing global and local models, to reduce the communication costs and the like. A wireless network environment dynamically changes at all times, for example, including terminal movement, interference intensity, a change in a busy/idle period of a service, and the like. However, a current collaborative learning algorithm is designed based on a stable network environment. If the algorithm is directly applied to the dynamically changing wireless network environment, learning performance may be significantly reduced.

**SUMMARY**

This application provides a network quantization method and apparatus, and a related device. The method is applicable to a dynamically changing wireless network, and can meet an accuracy requirement for a local/global model and reduce consumption of transmission bandwidth.

According to a first aspect, this application provides a network quantization method. The method is performed by a first device, or may be performed by a component (for example, a processor, chip, or chip system) of the first device, or may be implemented by a logic module or software capable of implementing all or some of functions of the first device. For example, the first device is a terminal device (such as a user in collaborative learning). The first device receives a first model and a first KL divergence in $t^{th}$ aggregation from a second device. The first model in the $t^{th}$ aggregation is obtained by the second device by aggregating a plurality of second models in $t^{th}$ update and quantization from a plurality of first devices. The first KL divergence in the $t^{th}$ aggregation represents an average difference between the plurality of second models in the $t^{th}$ update and quantization and the first model in the $t^{th}$ aggregation. t is a positive integer. The first device determines a second model in $(t + 1)^{th}$ update and quantization based on the first model and the first KL divergence in the $t^{th}$ aggregation, and sends the second model in the $(t + 1)^{th}$ update and quantization to the second device.

In the method, the first device may receive global aggregation information/a model (namely, the first model and the first KL divergence) delivered by the second device, and update a quantized local model based on the global aggregation information/the model. Because global knowledge is integrated, the first device can implement faster convergence when updating the quantized local model (namely, the second model), to improve training efficiency. In addition, the first device may continue to upload the second model to the second device, to perform a new round of update and quantization. Even if quantization causes a specific accuracy loss, this method still implements good learning performance, can meet an accuracy requirement for a local model, and helps reduce consumption of transmission bandwidth.

In a possible implementation, the first device determines a third model in $(t + 1)^{th}$ training based on the first model in the $t^{th}$ aggregation and a third model in $t^{th}$ training; and determines a quantization level of the third model in the $(t + 1)^{th}$ training based on the first KL divergence in the $t^{th}$ aggregation. The first device determines the second model in the $(t + 1)^{th}$ update and quantization based on the third model in the $(t + 1)^{th}$ training and the quantization level of the third model in the $(t + 1)^{th}$ training.

In the method, when updating the quantized local model based on the global aggregation information/the model, the first device may first train the local model based on a global model, to obtain a new local model. This helps implement good learning performance and meet the accuracy requirement for the local model. In addition, the first device may update a quantization level of the local model, and quantize the new local model based on a new quantization level. This helps reduce the consumption of the transmission bandwidth.

In a possible implementation, the first device determines an enhanced loss function in the $t^{th}$ training based on one or more of a cross-entropy loss function corresponding to the third model in the $t^{th}$ training, a cross-entropy loss function corresponding to the second model in the $t^{th}$ update and quantization, a radio resource consumed for transmitting the second model in the $t^{th}$ update and quantization, an upper limit of a radio resource allocable to the first device, and a second KL divergence in the $t^{th}$ training. The second KL divergence in the $t^{th}$ training represents a difference between the third model in the $t^{th}$ training and the first model in the $t^{th}$ aggregation, and/or a difference between the second model obtained in the $t^{th}$ update and quantization and the first model in the $t^{th}$ aggregation. The first device trains the first model in the $t^{th}$ aggregation based on the enhanced loss function in the $t^{th}$ training, to obtain the third model in the $(t + 1)^{th}$ training.

In the method, when updating the local model, the first device needs to additionally consider parameters such as a KL divergence and a wireless network resource, so that the local model is applicable to a dynamically changing wireless network and meets the accuracy requirement for the local/global model.

In a possible implementation, the first device updates a quantization level of the third model in the $t^{th}$ training based on one or more of the first KL divergence in the $t^{th}$ aggregation, a radio resource consumed for transmitting the second model obtained in the $t^{th}$ update and quantization, and a cross-entropy loss function of the second model obtained in the $t^{th}$ update and quantization, to obtain the quantization level of the third model in the $(t + 1)^{th}$ training.

In the method, when updating the quantization level of the local model, the first device also needs to additionally consider parameters such as a KL divergence and a wireless network resource, so that the quantized local model is also applicable to a dynamically changing wireless network and meets the accuracy requirement for the local/global model.

In a possible implementation, the first device quantizes the third model in the $(t + 1)^{th}$ training by using the quantization level of the third model in the $(t + 1)^{th}$ training, to determine the second model in the $(t + 1)^{th}$ update and quantization.

In the method, the first device may directly use an updated quantization level in a current round to quantize a trained local model in the current round. This helps reduce the consumption of the transmission bandwidth.

In a possible implementation, the first device updates the third model in the $(t + 1)^{th}$ training based on a third KL divergence in the $t^{th}$ update and quantization, to obtain a fourth model in the $(t + 1)^{th}$ training. The third KL divergence in the $t^{th}$ update and quantization represents a difference between the third model in the $(t + 1)^{th}$ training and the third model in the $t^{th}$ training, and/or a difference between a fourth model in the $(t + 1)^{th}$ update and quantization and the third model in the $t^{th}$ training. The fourth model in the $(t + 1)^{th}$ update and quantization is a model obtained by quantizing the third model in the $(t + 1)^{th}$ training by using the quantization level of the third model in the $(t + 1)^{th}$ training. The first device quantizes the fourth model in the $(t + 1)^{th}$ training by using the quantization level of the third model in the $(t + 1)^{th}$ training, to determine the second model in the $(t + 1)^{th}$ update and quantization.

In the method, because a global aggregation model may aggregate heterogeneous models (for example, local models of first devices served by different base stations are heterogeneous), the first device further considers a difference between the heterogeneous models when updating the local model based on the global aggregation model and the KL divergence. This helps narrow a gap between the heterogeneous models, improve model accuracy, and reduce the consumption of transmission bandwidth.

According to a second aspect, this application provides another network quantization method. The method is performed by a second device, or may be performed by a component (for example, a processor, chip, or chip system) of the second device, or may be implemented by a logic module or software capable of implementing all or some of functions of the second device. For example, the second device is an access network device or a core network device (for example, an aggregator in collaborative learning). The second device receives a plurality of second models in $t^{th}$ update and quantization from a plurality of first devices, where t is a positive integer. The second device aggregates the plurality of second models in the $t^{th}$ update and quantization, to obtain a first model and a first KL divergence in $t^{th}$ aggregation. The first KL divergence in the $t^{th}$ aggregation represents an average difference between the plurality of second models in the $t^{th}$ update and quantization and the first model in the $t^{th}$ aggregation. The second device sends the first model and the first KL divergence in the $t^{th}$ update and quantization to the plurality of first devices. The first model and the first KL divergence in the $t^{th}$ update and quantization are used by the first device to determine a second model in $(t + 1)^{th}$ update and quantization.

In the method, the second device may receive quantized local models (namely, the second models) from the first devices. Even if quantization causes a specific accuracy loss, this method still implements good learning performance, can meet an accuracy requirement for a local model, and helps reduce consumption of transmission bandwidth. In addition, the second device aggregates a plurality of quantized local models, to obtain and deliver global aggregation information/a model (namely, a third model and the first KL divergence). Because global knowledge is integrated, the first device can implement faster convergence when updating the quantized local model, to improve training efficiency.

In a possible implementation, the second device restores the plurality of second models in the $t^{th}$ update and quantization, to obtain a plurality of sixth models in $t^{th}$ restoration; and aggregates the plurality of sixth models in the $t^{th}$ restoration, to obtain the first model in the $t^{th}$ aggregation. The second device calculates the first KL divergence in the $t^{th}$ aggregation based on the first model in the $t^{th}$ aggregation and the plurality of second models in the $t^{th}$ update and quantization.

In the method, the second device may obtain the global aggregation information/model, and also obtain a KL divergence to determine a difference between the quantized local model and the global aggregation model. This helps improve model accuracy.

In a possible implementation, the second device receives a plurality of second models in the $(t + 1)^{th}$ update and quantization from the plurality of first devices. The second device aggregates the plurality of second models in the $(t + 1)^{th}$

update and quantization, to obtain a first model and a first KL divergence in $(t + 1)^{th}$ aggregation.

In the method, the second device may receive, from the first devices, local models updated based on the global aggregation model and the KL divergence. The second device may start a new round of global aggregation. This helps improve model accuracy.

According to a third aspect, this application provides a network quantization apparatus. The network quantization apparatus may be a terminal device, an apparatus in the terminal device, or an apparatus capable of matching with the terminal device for use. In a possible implementation, the network quantization apparatus may include a one-to-one corresponding module for performing the method/operation/step/action described in the first aspect and any one of the possible implementations of the first aspect. The module may be a hardware circuit or software, or may be implemented by a hardware circuit in combination with software. In a possible implementation, the network quantization apparatus may include a processing unit and a communication unit.

It may be understood that the network quantization apparatus can also implement an effect that can be implemented in the first aspect and any one of the possible implementations of the first aspect.

According to a fourth aspect, this application provides another network quantization apparatus. The network quantization apparatus may be a network device, an apparatus in the network device, or an apparatus capable of matching with the network device for use. In a possible implementation, the network quantization apparatus may include a one-to-one corresponding module for performing the method/operation/step/action described in the second aspect and any one of the possible implementations of the second aspect. The module may be a hardware circuit or software, or may be implemented by a hardware circuit in combination with software. In a possible implementation, the network quantization apparatus may include a processing unit and a communication unit.

It may be understood that the network quantization apparatus can also implement an effect that can be implemented in the second aspect and any one of the possible implementations of the second aspect.

According to a fifth aspect, this application provides a terminal device, including a processor and a memory. The memory is configured to store instructions. When the instructions are executed by the processor, the terminal device is enabled to implement the method according to the first aspect and any one of the possible implementations of the first aspect. Optionally, the processor is coupled to the memory.

According to a sixth aspect, this application provides a network device, including a processor and a memory. The memory is configured to store instructions. When the instructions are executed by the processor, the network device is enabled to implement the method according to the second aspect and any one of the possible implementations of the second aspect. Optionally, the processor is coupled to the memory.

According to a seventh aspect, this application provides a communication system. The communication system includes a plurality of the apparatus or devices according to the third to sixth aspects. The apparatuses or devices are enabled to perform the methods according to the first and second aspects and any one of the possible implementations of the first and second aspects.

According to an eighth aspect, this application provides a computer-readable storage medium. The computer-readable storage medium stores instructions. When the instructions are run on a computer, the computer is enabled to perform the methods according to the first and second aspects and any one of the possible implementations of the first and second aspects.

According to a ninth aspect, this application provides a chip system. The chip system includes a processor and an interface, may further include a memory, and is configured to implement the methods according to the first and second aspects and any one of the possible implementations of the first and second aspects. The chip system may include a chip, or may include a chip and another discrete device.

According to a tenth aspect, this application provides a computer program product, including instructions. When the instructions are run on a computer, the computer is enabled to perform the methods according to the first and second aspects and any one of the possible implementations of the first and second aspects.

## BRIEF DESCRIPTION OF DRAWINGS

FIG. 1 is a diagram of a communication system according to this application;
FIG. 2 is a diagram of one global iteration according to this application;
FIG. 3 is a schematic flowchart of a network quantization method according to this application;
FIG. 4 is a diagram of a model accuracy comparison between a network quantization method provided in this application and other collaborative learning solutions;
FIG. 5 is a diagram of another model accuracy comparison between a network quantization method provided in this application and other collaborative learning solutions;
FIG. 6 is a diagram of a bandwidth resource comparison between a network quantization method provided in this application and other collaborative learning solutions;
FIG. 7 is a diagram of a training time comparison between a network quantization method provided in this application and other collaborative learning solutions;
FIG. 8 is a diagram of another training time comparison between a network quantization method provided in this application and other collaborative learning solutions;
FIG. 9 is a diagram of an apparatus according to this application; and
FIG. 10 is a diagram of a device according to this application.

## DESCRIPTION OF EMBODIMENTS

In embodiments of this application, "/" may represent an "or" relationship between associated objects. For example, A/B may represent A or B. "and/or" may be used to indicate that there are three relationships between associated objects. For example, A and/or B may represent the following three cases: Only A exists, both A and B exist, and only B exists, where A and B may be singular or plural. For ease of describing the technical solutions in embodiments of this application, in embodiments of this application, words such as "first" and "second" may be used to distinguish technical features with a same or similar function. The words such as "first" and "second" do not limit a quantity and an execution sequence, and the words such as "first" and "second" do not limit a definite difference. In embodiments of this application, a word such as "example" or "for example" is used to represent an example, evidence, or a description. Any embodiment or design solution described as "example" or "for example" should not be explained as being more preferred or having more advantages than another embodiment or design solution. The word such as "example" or "for example" is used to present a related concept in a specific manner for ease of understanding.

The following describes the technical solutions in embodiments of this application with reference to the accompanying drawings in embodiments of this application.

To implement collaborative learning with high learning performance and reduce communication overheads in a dynamically changing wireless network environment, this application provides a network quantization method. The method is applicable to a dynamically changing wireless network, and can meet an accuracy requirement for a local/global model and reduce consumption of transmission bandwidth.

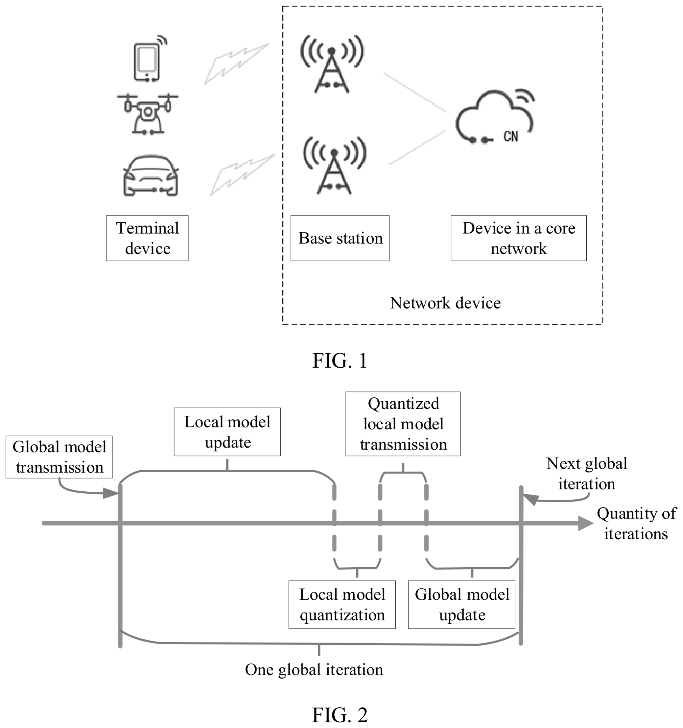

The network quantization method provided in this application may be applied to a communication system shown in FIG. 1. For example, the communication system includes a network device and a terminal device. In a possible implementation, the network device is an access network device that provides a user access function, such as a base station. In another possible implementation, the network device is a device in a core network, such as an access and mobility management function (access and mobility management function, AMF) network element. The network device communicates with the terminal device through the base station.

The communication system in this application may include, but is not limited to, a communication system using various radio access technologies (radio access technologies, RATs), for example, may be an LTE communication system; a 5G (or referred to as new radio (new radio, NR)) communication system; a transition system between the LTE communication system and the 5G communication system, where the transition system may also be referred to as a 4.5G communication system; or a future communication system, like a 6th generation (6th generation, 6G) or even a 7th generation (7th generation, 7G) system. A network architecture and a service scenario described in embodiments of this application are intended to describe the technical solutions in embodiments of this application more clearly, and do not constitute a limitation on the technical solutions provided in embodiments of this application. A person of ordinary skill in the art may know that with evolution of communication network architectures and emergence of new service scenarios, the technical solutions provided in embodiments of this application are also applicable to similar technical problems.

The terminal device, also referred to as a user equipment (user equipment, UE), a mobile station (mobile station, MS), a mobile terminal (mobile terminal, MT), or the like, is a device that provides voice and/or data connectivity for a user, for example, a handheld device or a vehicle-mounted device having a wireless connection function. Currently, for example, the terminal device is a mobile phone (mobile phone), a tablet computer, a notebook computer, a palmtop computer, a mobile internet device (mobile internet device, MID), a wearable device, an uncrewed aerial vehicle, a virtual reality (virtual reality, VR) device, an augmented reality (augmented reality, AR) device, a wireless terminal in industrial control (industrial control), a wireless terminal in self-driving (self-driving), a wireless terminal in remote medical surgery (remote medical surgery), a wireless terminal in a smart grid (smart grid), a wireless terminal in transportation safety (transportation safety), a wireless terminal in a smart city (smart city), a wireless terminal in a smart home (smart home), a terminal device in a 5G network, a terminal device in a future evolved PLMN network, a terminal device in a future communication system, or the like.

The access network device, also referred to as a base station, is a radio access network (radio access network, RAN) node (or device) that connects the terminal device to a wireless network. For example, the RAN node is a continuously evolved NodeB (gNB), a transmission reception point (transmission reception point, TRP), an evolved NodeB (evolved NodeB, eNB), a radio network controller (radio network controller, RNC), a NodeB (NodeB, NB), a base station controller (base station controller, BSC), a base transceiver station (base transceiver station, BTS), a home base station (for example, a home evolved NodeB, or a home NodeB, HNB), a baseband unit (baseband unit, BBU), a wireless fidelity (wireless fidelity, Wi-Fi) access point (access point, AP), a satellite in a satellite communication system, a radio controller in a cloud radio access network (cloud radio access network, CRAN) scenario, a wearable device, an uncrewed aerial vehicle, a device in an internet of vehicles (for example, a vehicle-to-everything (vehicle-to-everything, V2X) device), a communication device in device-to-device (device-to-device, D2D) communication, or the like. In addition, in a network structure, an access network device may include a central unit (central unit, CU) node, a distributed unit (distributed unit, DU) node, or a RAN device including a CU node and a DU node. The RAN device including the CU node and the DU node routes protocol layers of an eNB in a long term evolution (long term evolution, LTE) system. Functions of some protocol layers are centrally controlled by a CU, functions of some or all of remaining protocol layers are distributed in a DU, and the CU centrally controls the DU.

The device in the core network includes, for example, an AMF network element, a user plane function (user plane function, UPF) network element, and the like. The AMF is configured for user access management, security authentication, mobility management, and the like. The AMF may communicate with the base station, so that the AMF can communicate with the terminal device through the base station. The UPF is configured to manage transmission of user plane data, collect traffic statistics, and the like.

I. For ease of understanding, the following describes in detail definitions of related terms in this application.

1. Collaborative learning

Widely recognized as one of the most potential promoters of network intelligence, collaborative learning not only facilitates collaborative training of a machine learning model, but also protects user privacy and data security. For example, in collaborative learning, a collaborative (global) model is trained through a plurality of global iterations. In each global iteration, each agent performs one information/model interaction. Traditional collaborative learning falls into two categories: multi-agent learning and distributed learning.

In multi-agent learning, an agent (namely, an intelligent device) may interact with an environment and another agent to complete a specific learning task through collaboration, coordination, competition, or collective learning. In addition, transmitted interaction content may be set based on a training requirement (for example, data and a reward). In distributed machine learning, agents actively interact by sharing lightweight experience (such as local training parameters and gradients) and assuming asymmetric roles to cooperatively establish consensus. Compared with a traditional centralized machine learning method, collaborative learning not only can maintain a global shared learning model to resolve a problem of large-scale machine learning, but also can reduce a network burden. Distributed machine learning can also protect user privacy and data security.

Although collaborative learning provides these attractive and valuable advantages, it still faces many challenges in achieving network intelligence, especially when deployed in a wireless network. When an agent transmits interaction content, a considerable amount of transmission resources are consumed. For example, in distributed machine learning, even if lightweight models (for example, parameters and gradients) instead of original data are transmitted, radio resource costs generated in a transmission process can be as high as billions of bytes when a sufficient quantity of user equipments participate in training or a scale of local models is large enough. In addition, heterogeneity of wireless systems (heterogeneity of computing resources and communication resources) reduces collaborative learning performance (a training time and model accuracy). For example, an agent with an unstable radio link for transmitting a model or with low computing power has a limited transmission rate and/or computing speed. Due to privacy and data security concerns for agents, many companies/organizations are developing their own models for different tasks and hope to seek collaboration without sharing learning model details/local data.

For example, as a typical collaborative learning framework, federated learning is widely regarded as one of the most potential collaborative learning methods to support network collaborative intelligence. Federated learning can be used to resolve a problem of locally updating models by users. Its design objective is to implement efficient machine learning in a plurality of participants or computing nodes while ensuring information security during big data exchange, protecting terminal data and personal data privacy, and ensuring legal compliance. Machine learning algorithms that can be used in federated learning are not limited to neural networks, but also include important algorithms such as random forest. Federated learning is expected to be a basis of a next-generation artificial intelligence collaboration algorithm and collaborative network.

2. Quantization

Quantization is an effective and efficient method for reducing communication costs. It reduces the communication costs by transmitting a quantized model instead of an original full-precision model, while maintaining learning accuracy similar to that of the original full-precision model. In a transmission interaction task of collaborative learning, quantization may reduce communication overheads by decreasing a quantity of bits representing a transmitted model/transmitted data. For example, a convergence speed is guaranteed through a double quantization solution, and the communication overheads are reduced through model parameter and gradient quantization. A lossy collaborative learning algorithm may also be introduced by quantizing global and local models, to reduce the communication overheads and the like. In quantization, a model error may be caused when arithmetic precision of model update is reduced. This may hinder convergence of the collaborative learning algorithm. In addition, due to a strict constraint on a radio resource in a wireless network, transmitted interaction content is different not only in size, structure, and task, but also in quantization level and quantization precision.

3. KL divergence (Kullback-Leibler divergence, KLD)

A relative entropy (relative entropy) is also referred to as a KL divergence, an information divergence (information divergence), and an information gain (information gain). The KL divergence is a measure of asymmetry of a difference between two probability distributions P and Q, and is used to measure an average quantity of additional bits needed for encoding samples from P by using a code optimized for Q. Typically, P represents an actual data distribution, and Q represents a theoretical data distribution, a model distribution, or an approximate distribution of P.

II. Network quantization method provided in this application:

The network quantization method provided in this application is a collaborative learning-based adaptive quantization solution implemented on a basis of federated learning. In collaborative learning, a collaborative (global) model is trained through a plurality of global iterations. In each global iteration, one information/model interaction is performed between agents (for example, between a first device and a second device). In this application, in an interaction process, compressed and quantized information/models are transmitted between agents. In addition, a quantization level of the transmitted information/models may be adjusted based on their own network environment. The collaborative learning-based adaptive quantization solution mainly includes local update (local model update and quantization level update) and global aggregation. A process of one local update and one global aggregation may be referred to as one global iteration. In each global iteration, the first device locally performs a plurality of local model updates, and sends a local update result to the second device for aggregation. For example, FIG. 2 is a diagram of one global iteration according to this application. One global iteration includes global model transmission (global transmission, including transmission of a global model and a KL divergence), local model update (local model updating), local model quantization (local model quantization, including model quantization and quantization level update), quantized local model transmission (quantized models transmission), and global model update (global aggregation, including model restoration and global model aggregation). It is assumed that a $t^{th}$ global iteration starts with $t^{th}$ global model transmission. After local model update, local model quantization, quantized local model transmission, and global model update, the $t^{th}$ global iteration is completed. t is a positive integer. Optionally, when $(t + 1)^{th}$ global model transmission starts, a $(t + 1)^{th}$ global iteration also starts. By analogy, a plurality of cyclic iterations are performed until convergence.

The network quantization method provided in this application is described below through specific step examples.

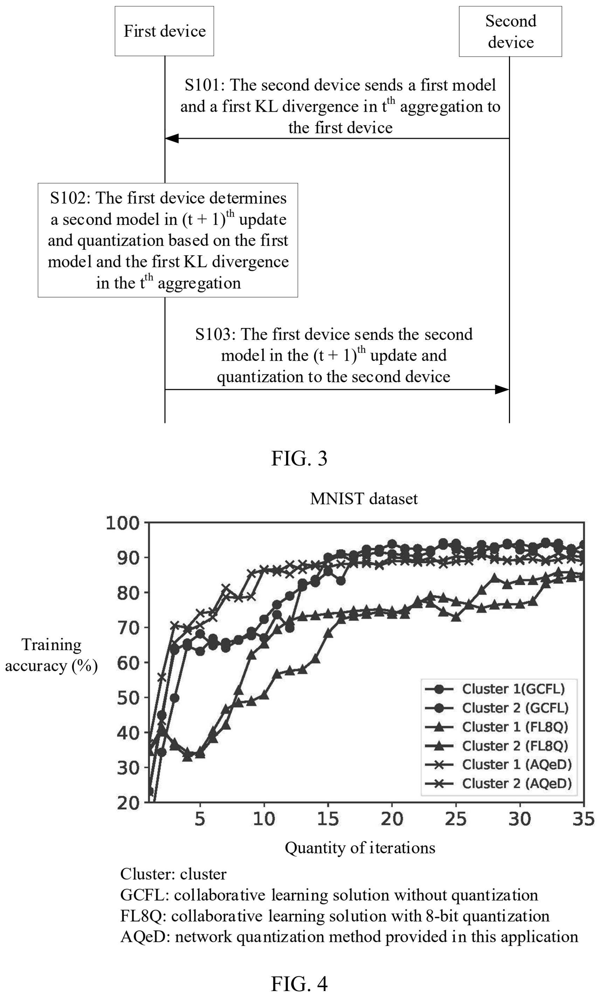

For example, FIG. 3 is a schematic flowchart of a network quantization method according to this application. The network quantization method is applied to the communication system shown in FIG. 1. For example, the network quantization method may be implemented through interaction between a first device and a second device. The first device is a terminal device (for example, a user in collaborative learning). The second device is an access network device or a core network device (for example, an aggregator in collaborative learning). The method includes the following steps.

S101: The second device sends a first model and a first KL divergence in $t^{th}$ aggregation to the first device. Correspondingly, the first device receives the first model and the first KL divergence in the $t^{th}$ aggregation from the second device.

The first model in the $t^{th}$ aggregation is obtained by the second device by aggregating a plurality of second models in $t^{th}$ update and quantization from a plurality of first devices, namely, a global model in global model transmission in one iteration shown in FIG. 2. The second model in the $t^{th}$ update and quantization from the first device is a quantized local model obtained by the first device by updating and quantizing a local model, and corresponds to a quantized local model obtained through local model update and local model quantization in one iteration shown in FIG. 2. It may be understood that if the second device is the aggregator in collaborative learning, the second device may obtain the second models from the plurality of first devices, and aggregate the plurality of second models to obtain the global model. Optionally, the plurality of first devices may be a plurality of first devices in a same cluster (for example, accessing a same base station), or a plurality of first devices in different clusters (for example, accessing different base stations). This is not limited in this application. Optionally, S101 is merely an example in which the second device sends the first model and the first KL divergence in the $t^{th}$ aggregation to any one of the plurality of first devices. The second device may further send the first model and the first KL divergence in the t<sup>th</sup> aggregation to the other ones of the plurality of first devices. This is not limited in this application.

For ease of description, in this application, the first model in the t<sup>th</sup> aggregation is denoted as $g^t$, and the second model in the t<sup>th</sup> update and quantization from any one (assumed to be an i<sup>th</sup> first device) of the plurality of first devices is denoted as $Q_{c^t}(w_i(t))$. $t$ represents a t<sup>th</sup> global iteration (including the t<sup>th</sup> aggregation, the t<sup>th</sup> update and quantization, and the like). $Q_{c^t}(\ )$ represents quantization. $w_i(t)$ represents a third model (corresponding to a local model in local model update in one iteration shown in FIG. 2) of the i<sup>th</sup> first device in t<sup>th</sup> training. Both t and i are positive integers. Optionally, if the plurality of first devices are devices in different clusters (for example, accessing different base stations), the third model of the i<sup>th</sup> first device in a u<sup>th</sup> cluster in the t<sup>th</sup> training is denoted as $w_i^u(t)$, and the second model in the t<sup>th</sup> update and quantization from the i<sup>th</sup> first device in the u<sup>th</sup> cluster is denoted as $Q_{c^t}\left(w_i^u(t)\right)$.

Specifically, $g^t$ is a global model obtained by the second device by aggregating a plurality of local models. The aggregation includes model restoration and global model aggregation. For example, before S101, the second device receives the second models in the t<sup>th</sup> update and quantization from the plurality of first devices; restores the plurality of second models in the t<sup>th</sup> update and quantization from the plurality of first devices, to obtain a plurality of sixth models in t<sup>th</sup> restoration; and aggregates the plurality of sixth models in the t<sup>th</sup> restoration, to obtain the first model in the t<sup>th</sup> aggregation. The plurality of sixth models in the t<sup>th</sup> restoration are a plurality of restored local models (for example, the restored local model obtained by the second device for the i<sup>th</sup> first device may be denoted as $\bar{w}_i(t)$). Then, the second device aggregates the plurality of restored local models to obtain $g^t$.

The first KL divergence in the t<sup>th</sup> aggregation represents an average difference between the plurality of second models in the t<sup>th</sup> update and quantization and the first model in the t<sup>th</sup> aggregation, namely, a KL divergence in global model transmission in one iteration shown in FIG. 2. For example, the second device may calculate an average difference (namely, the first KL divergence in the t<sup>th</sup> aggregation) between a plurality of quantized local models and the global model based on a formula (1) or formula (2).

$$\tilde{f}\left(Q_{c^t}\left(w_i(t)\right), g^t\right) = \frac{\sum_{i=1}^{N} f_i^{KD}\left(Q_{c^t}\left(w_i(t)\right), g^t\right)}{N} \quad (1)$$

$$\tilde{f}\left(Q_{c^t}\left(w_i^u(t)\right), g^t\right) = \frac{\sum_{u=1}^{M}\sum_{i=1}^{N} f_{i,u}^{KD}\left(Q_{c^t}\left(w_i^u(t)\right), g^t\right)}{\sum_{u=1}^{M} N^u} \quad (2)$$

If the plurality of first devices are a plurality of devices in a same cluster, the second device calculates the average difference between the plurality of quantized local models and the global model through the formula (1). In the formula (1), $\tilde{f}(Q_{c^t}(w_i(t)), g^t)$ represents the first KL divergence (average difference) in the t<sup>th</sup> aggregation, N represents a quantity of first devices, and $f_i^{KD}\left(Q_{c^t}\left(w_i(t)\right), g^t\right)$ represents a difference between the first model in the t<sup>th</sup> aggregation and the second model in the t<sup>th</sup> update and quantization from the i<sup>th</sup> first device. If the plurality of first devices are a plurality of devices in different clusters, the second device calculates the average difference between the plurality of quantized local models and the global model through the formula (2). In the formula (2), $\tilde{f}\left(Q_{c^t}\left(w_i^u(t)\right), g^t\right)$ represents the first KL divergence (average difference) in the t<sup>th</sup> aggregation, $N^u$ represents a quantity of first devices in the u<sup>th</sup> cluster (it is assumed that there are M clusters in total), $\sum_{u=1}^{M} N^u$ represents a total quantity of first devices in the M clusters, and $f_{i,u}^{KD}\left(Q_{c^t}\left(w_i^u(t)\right), g^t\right)$ represents a difference between the first model in the t<sup>th</sup> aggregation and the second model in the t<sup>th</sup> update and quantization from the i<sup>th</sup> first device in the u<sup>th</sup> cluster.

After the second device completes one global model update, the second device sends the first model $g^t$ and the

EP 4 648 375 A1

first KL divergence $(\tilde{f}(Q_{c^t}(w_i(t)), g^t)$ or $\tilde{f}\left(Q_{c^t}\left(w_i^u(t)\right), g^t\right))$ in the $t^{th}$ aggregation to the first device.

S102: The first device determines a second model in $(t+1)^{th}$ update and quantization based on the first model and the first KL divergence in the $t^{th}$ aggregation.

The second model in the $(t+1)^{th}$ update and quantization corresponds to a quantized local model obtained through local model update and local model quantization in one iteration shown in FIG. 2, and is a quantized local model in a new iteration compared with the second model in the $t^{th}$ update and quantization in S101. For ease of description, in this application, the second model in the $(t+1)^{th}$ update and quantization from any one (assumed to be the $i^{th}$ first device) of the plurality of first devices is denoted as $Q_{c^t}(w_i(t+1))$. $w_i(t+1)$ represents a third model (corresponding to a local model in local model update in one iteration shown in FIG. 2) of the $i^{th}$ first device in $(t+1)^{th}$ training. Optionally, if the plurality of first devices are devices in different clusters (for example, accessing different base stations), the third model of the $i^{th}$ first device in the $u^{th}$ cluster in the $(t+1)^{th}$ training is denoted as $w_i^u(t+1)$, and the second model in the $(t+1)^{th}$ update and quantization from the $i^{th}$ first device in the $u^{th}$ cluster is denoted as $Q_{c^t}\left(w_i^u(t+1)\right)$.

Specifically, when S102 is performed, the following procedure may be included:

(1) The first device determines the third model in the $(t+1)^{th}$ training based on the first model in the $t^{th}$ aggregation and the third model in the $t^{th}$ training.

When the first device receives the first model (namely, the global model $g^t$) in the $t^{th}$ aggregation from the second device, the first device may first train the local model by using the global model, to obtain the third model (namely, a local model obtained after a new round of training) in the $(t+1)^{th}$ training. In addition, when training the local model, the first device needs to additionally consider a wireless network resource and a KL divergence. Specifically, when the first device determines the third model in the $(t+1)^{th}$ training based on the first model in the $t^{th}$ aggregation and the third model in the $t^{th}$ training, the following training procedure may be included:

The first device determines an enhanced loss function in the $t^{th}$ training based on one or more of a cross-entropy loss function corresponding to the third model in the $t^{th}$ training, a cross-entropy loss function corresponding to the second model in the $t^{th}$ update and quantization, a radio resource consumed for transmitting the second model in the $t^{th}$ update and quantization, an upper limit of a radio resource allocable to the first device, and a second KL divergence in the $t^{th}$ training. The second KL divergence in the $t^{th}$ training represents a difference between the third model in the $t^{th}$ training and the first model in the $t^{th}$ aggregation, and/or a difference between the second model obtained in the $t^{th}$ update and quantization and the first model in the $t^{th}$ aggregation.

The first device trains the first model in the $t^{th}$ aggregation based on the enhanced loss function in the $t^{th}$ training, to obtain the third model in the $(t+1)^{th}$ training.

For example, the foregoing training procedure may be expressed as formulas (3) and (4):

$$w_i(t+1) = w_i(t) - \eta_1 \nabla_w \tilde{f}_i\left(w_i(t), c^t, g^t\right) \quad (3)$$

$$\tilde{f}_i\left(w_i(t), c^t, g^t\right) = f_i\left(w_i(t)\right) + f_i\left(Q_{c^t}\left(w_i(t)\right)\right) + \lambda_1\left(b_i\left(Q_{c^t}\left(w_i(t)\right)\right) - B_i\right) + \lambda_2\left(f_i^{KD}\left(w_i(t), g^t\right) + f_i^{KD}\left(Q_{c^t}\left(w_i(t)\right), g^t\right)\right) \quad (4)$$

$w_i(t+1)$ represents the third model in the $(t+1)^{th}$ training. $c^t$ represents a quantization level of the third model in the $t^{th}$ training. $\tilde{f}_i(w_i(t), c^t, g^t)$ represents the enhanced loss function in the $t^{th}$ training. $f_i(w_i(t))$ represents the cross-entropy loss function corresponding to the third model in the $t^{th}$ training. $f_i\left(Q_{c^t}\left(w_i(t)\right)\right)$ represents the cross-entropy loss function corresponding to the second model in the $t^{th}$ update and quantization. $b_i(Q_{c^t}(w_i(t)))$ represents the radio resource consumed for transmitting the second model in the $t^{th}$ update and quantization. $B_i$ represents the upper limit of the radio resource allocable to the $i^{th}$ first device. $f_i^{KD}(w_i(t), g^t)$ represents the difference between the third model in the $t^{th}$ training and the first model in the $t^{th}$ aggregation. $f_i^{KD}(Q_{c^t}(w_i(t)), g^t)$ represents the difference between the second model obtained in the $t^{th}$ update and quantization and the first model in the $t^{th}$ aggregation. The second KL divergence in the $t^{th}$ training represents the difference between the third model in the $t^{th}$ training and the first model in the $t^{th}$ aggregation, and/or the difference between the second model obtained in the $t^{th}$ update and quantization and the first model in the $t^{th}$ aggregation. In other words, the second KL divergence in the $t^{th}$ training includes one or more of $f_i^{KD}(w_i(t), g^t)$ and $f_i^{KD}(Q_{c^t}(w_i(t)), g^t)$. $\eta_1$,

$\lambda_1$, and $\lambda_2$ are coefficients of the foregoing parameters. Their specific values are not limited in this application.

(2) The first device determines a quantization level of the third model in the $(t + 1)^{th}$ training based on the first KL divergence in the $t^{th}$ aggregation.

After obtaining the third model in the $(t + 1)^{th}$ training (that is, updating the local model), the first device may further determine the quantization level of the third model in the $(t + 1)^{th}$ training (that is, update a quantization level of the local model). In addition, when updating the quantization level of the local model, the first device also needs to additionally consider a wireless network resource and a KL divergence. Specifically, when the first device determines the quantization level of the third model in the $(t + 1)^{th}$ training based on the first KL divergence in the $t^{th}$ aggregation, the following update procedure may be included:

The first device updates the quantization level of the third model in the $t^{th}$ training based on one or more of the first KL divergence in the $t^{th}$ aggregation, the radio resource consumed for transmitting the second model obtained in the $t^{th}$ update and quantization, and the cross-entropy loss function of the second model obtained in the $t^{th}$ update and quantization, to obtain the quantization level of the third model in the $(t + 1)^{th}$ training.

For example, the foregoing update procedure may be expressed as a formula (5):

$$c^{t+1} = c^t - \eta_2 \nabla_c \tilde{f}_i \left( w_i(t), c^t, g^t \right)$$
$$= c^t - \eta_2 \left( \nabla_c f_i \left( Q_{c^t}(w_i(t)) \right) + \lambda_1 \nabla_c b_i \left( Q_{c^t}(w_i(t)) + \lambda_1 \nabla_c f_i^{KD} \left( Q_{c^t}(w_i(t)), g^t \right) \right) \right) \quad (5)$$

$c^{t+1}$ represents the quantization level of the third model in the $(t + 1)^{th}$ training. $f_i^{KD}\left( Q_{c^t}(w_i(t)), g^t \right)$ represents the difference between the second model obtained in the $t^{th}$ update and quantization and the first model in the $t^{th}$ aggregation. $f_i(Q_{c^t}(w_i(t)))$ represents the cross-entropy loss function corresponding to the second model in the $t^{th}$ update and quantization. $b_i(Q_{c^t}(w_i(t)))$ represents the radio resource consumed for transmitting the second model in the $t^{th}$ update and quantization. $\eta_2$ and $\lambda_1$ are coefficients of the foregoing parameters. Their specific values are not limited in this application.

(3) The first device determines the second model in the $(t + 1)^{th}$ update and quantization based on the third model in the $(t + 1)^{th}$ training and the quantization level of the third model in the $(t + 1)^{th}$ training.

After determining the third model in the $(t + 1)^{th}$ training and the quantization level of the third model in the $(t + 1)^{th}$ training (that is, updating the local model and the quantization level of the local model), the first device may determine the second model in the $(t + 1)^{th}$ update and quantization (that is, update the quantized local model). For example, the first device quantizes the third model in the $(t + 1)^{th}$ training by using the quantization level of the third model in the $(t + 1)^{th}$ training, to determine the second model in the $(t + 1)^{th}$ update and quantization.

Optionally, if the plurality of first devices are devices in different clusters, because there is a difference between models of the different clusters, the first device may further consider a difference between heterogeneous models of the different clusters when determining the second model in the $(t + 1)^{th}$ update and quantization, to narrow a gap between the heterogeneous models of the different clusters. For example, the first device updates the third model in the $(t + 1)^{th}$ training based on a third KL divergence in the $t^{th}$ update and quantization, to obtain a fourth model in the $(t + 1)^{th}$ training. The third KL divergence in the $t^{th}$ update and quantization represents a difference between the third model in the $(t + 1)^{th}$ training and the third model in the $t^{th}$ training, and/or a difference between a fourth model in the $(t + 1)^{th}$ update and quantization and the third model in the $t^{th}$ training. The fourth model in the $(t + 1)^{th}$ update and quantization is a model obtained by quantizing the third model in the $(t + 1)^{th}$ training by using the quantization level of the third model in the $(t + 1)^{th}$ training. The first device quantizes the fourth model in the $(t + 1)^{th}$ training by using the quantization level of the third model in the $(t + 1)^{th}$ training, to determine the second model in the $(t + 1)^{th}$ update and quantization. The foregoing procedure may be expressed as formulas (6) and (7):

$$w_i(t+1)' = w_i(t) - \eta_3 \lambda_2 \left( \nabla_w f_i^{KD} \left( w_i(t+1), w_i(t) \right) + \nabla_w f_i^{KD} \left( Q_{c^t}(w_i(t+1)), w_i(t) \right) \right) \quad (6)$$

$$Q_{c^t}\left( w_i(t+1) \right) = Q_{c^t}\left( w_i(t+1)' \right) \quad (7)$$

$Q_{c^t}(w_i(t+1))$ represents the second model in the $(t + 1)^{th}$ update and quantization. $w_i(t+1)'$ represents the fourth model in the $(t + 1)^{th}$ training. $f_i^{KD}(w_i(t+1), w_i(t))$ represents the difference between the third model in the $(t + 1)^{th}$ training and the third model in the t<sup>th</sup> training. $f_i^{KD}\left(Q_{c'}\left(w_i(t+1)\right), w_i(t)\right)$ represents the difference between the fourth model in the $(t + 1)^{th}$ update and quantization and the third model in the t<sup>th</sup> training. $\eta_3$ and $\lambda_2$ are coefficients of the foregoing parameters. Their specific values are not limited in this application.

It may be understood that, for a calculation manner used when any one of the plurality of first devices performs S102, refer to the descriptions of the formulas (3) to (7). Details are not described herein. Optionally, if the plurality of first devices include devices in different clusters, the formulas (3) to (7) may be transformed by referring to corresponding descriptions of the formulas (1) and (2), to obtain corresponding formulas by analogy. Details are not described herein.

S103: The first device sends the second model in the $(t + 1)^{th}$ update and quantization to the second device. Correspondingly, the second device receives the second model in the $(t + 1)^{th}$ update and quantization from the first device.

For example, after completing the $(t + 1)^{th}$ update and quantization, the first device may send the second model in the $(t + 1)^{th}$ update and quantization to the second device, which corresponds to a next global iteration shown in FIG. 2, to continue to perform the next global iteration until a convergence condition is met.

In this embodiment, the first device may receive global aggregation information/a model (namely, the first model and the first KL divergence) delivered by the second device, and update the quantized local model based on the global aggregation information/the model. Because global knowledge is integrated, the first device can implement faster convergence when updating the quantized local model (namely, the second model), to improve training efficiency. In addition, the first device may continue to upload the second model to the second device, to perform a new round of update and quantization. Even if quantization causes a specific accuracy loss, this method still implements good learning performance, can meet an accuracy requirement for a local model, and helps reduce consumption of transmission bandwidth.

III. Performance analysis of the network quantization method in this application:

1. Model accuracy comparison:

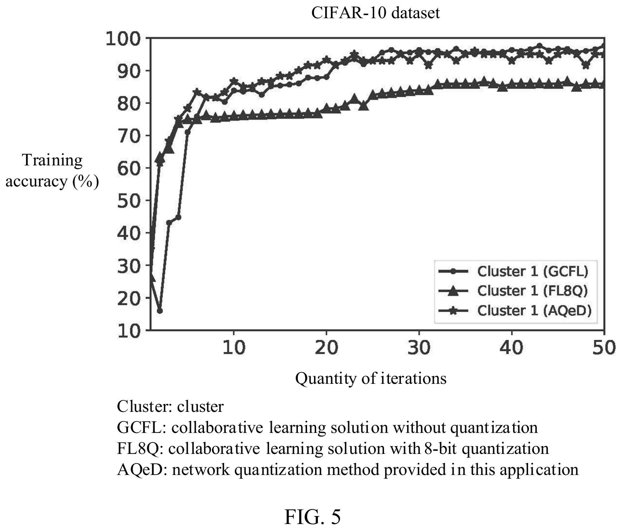

For example, FIG. 4 and FIG. 5 are diagrams of model accuracy comparisons between the network quantization method provided in this application and other collaborative learning solutions. In FIG. 4, a horizontal coordinate represents a quantity of iterations, and a vertical coordinate represents training accuracy. It is assumed that there are two clusters (a cluster 1 and a cluster 2), and a used dataset is an MNIST dataset. In FIG. 5, a horizontal coordinate represents a quantity of iterations, and a vertical coordinate represents training accuracy (%). It is assumed that there is one cluster (a cluster 1), and a used dataset is a CIFAR-10 dataset. It can be deduced from FIG. 4 and FIG. 5 that even if quantization causes a specific accuracy loss, the network quantization method provided in this application still implements good learning performance. In addition, it can be deduced from FIG. 4 and FIG. 5 that training accuracy of the network quantization method (referred to as AQeD for short) provided in this application is close to that of a collaborative learning solution without quantization (referred to as GCFL for short), and is significantly higher than that of a collaborative learning solution with 8-bit (8-bit) quantization performed on all transmitted models (referred to as FL8Q for short).

2. Bandwidth resource comparison:

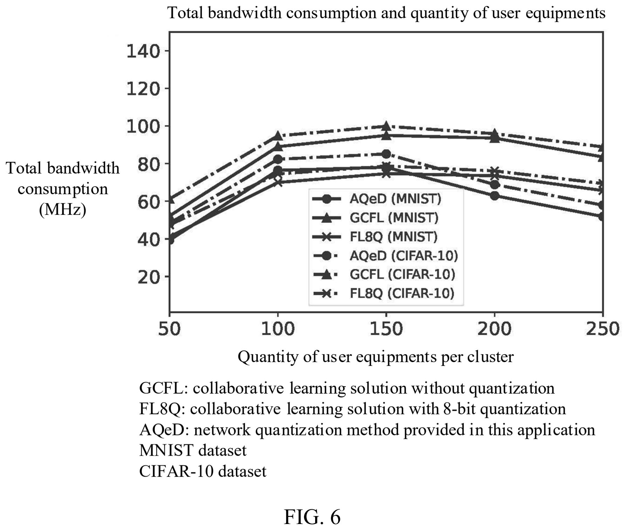

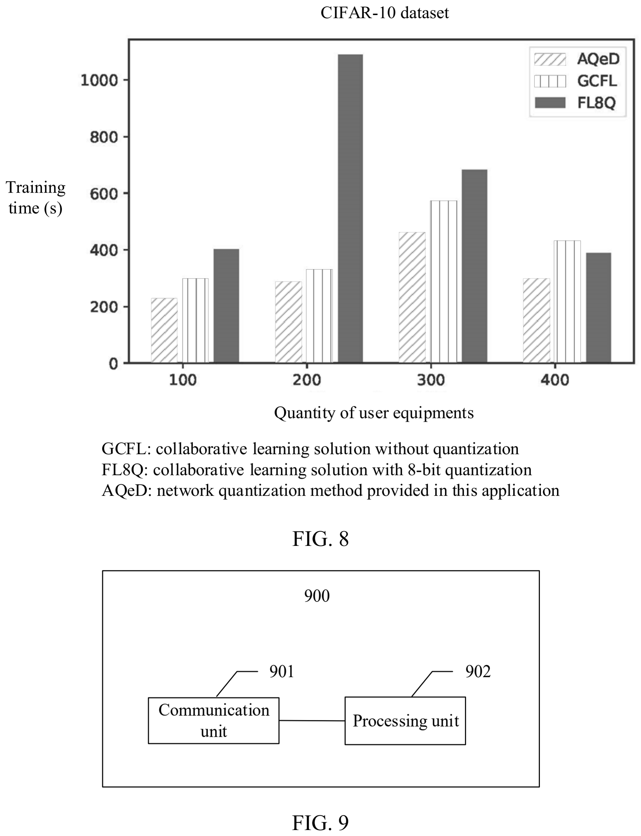

For example, FIG. 6 is a diagram of a bandwidth resource comparison between the network quantization method provided in this application and other collaborative learning solutions. In FIG. 6, a horizontal coordinate represents a quantity of user equipments in each cluster, and a vertical coordinate represents total bandwidth consumption (megahertz, MHz). It is assumed that there are two clusters (a cluster 1 and a cluster 2), and used datasets include an MNIST dataset and a CIFAR-10 dataset. It can be deduced from FIG. 6 that the network quantization method provided in this application uses a small amount of bandwidth resources. FIG. 6 shows total bandwidth consumption in a cluster when model training accuracy reaches 70%. FIG. 8 shows that the total bandwidth consumption in the cluster varies with the quantity of user equipments for the MNIST dataset and the CIFAR-10 dataset. It can be deduced from FIG. 6 that the bandwidth consumption starts to increase as the quantity of user equipments increases, and reaches a maximum value when a specific quantity of user equipments is reached; and then decreases as the quantity of user equipments increases. Specifically, when the quantity of user equipments is less than approximately 300 (in other words, a quantity of user equipments in each cluster is less than approximately 150), the total bandwidth consumption increases as the quantity of users increases. When the quantity of user equipments exceeds approximately 300 (in other words, the quantity of user equipments in each cluster exceeds approximately 150), the total bandwidth consumption decreases (because poor channel quality causes some user equipments to be unable to transmit local models). In addition, it can be deduced from FIG. 6 that total bandwidth consumption of a solution with model quantization (for example, AQeD and FL8Q) is lower than that of a collaborative learning solution without quantization (for example, GCFL).

3. Training time comparison:

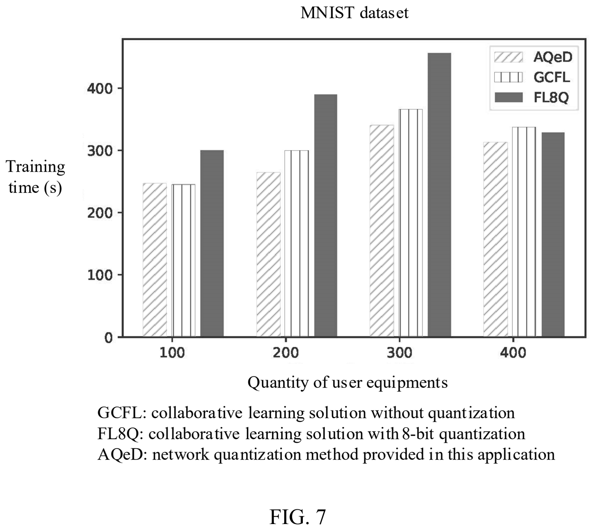

For example, FIG. 7 and FIG. 8 are diagrams of training time comparisons between the network quantization method provided in this application and other collaborative learning solutions. In FIG. 7, a horizontal coordinate represents a quantity of user equipments, and a vertical coordinate represents a training time (seconds, s). It is assumed that there are two clusters (a cluster 1 and a cluster 2), and a used dataset is an MNIST dataset. In FIG. 8, a horizontal coordinate represents a quantity of user equipments, and a vertical coordinate represents a training time. It is assumed that there are two clusters (a cluster 1 and a cluster 2), and a used dataset is a CIFAR-10 dataset. It can be deduced from FIG. 7 and FIG. 8 that in the network quantization method provided in this application, faster convergence can be implemented because global knowledge is integrated. In addition, a training time of the network quantization method provided in this application is shorter than that of another collaborative learning solution (for example, FL8Q or GCFL). This is because local model training is based on global experience of heterogeneous models. In addition, when the quantity of user equipments is less than approximately 300 (in other words, a quantity of user equipments in each cluster is less than approximately 150), the training time increases as the quantity of user equipments increases. When the quantity of user equipments exceeds approximately 300 (in other words, the quantity of user equipments in each cluster exceeds approximately 150), the training time decreases as the quantity of user equipments increases. This is because a server cannot successfully receive quantized local models due to poor channel quality, and a transmission time increases as the quantity of user equipments increases.

To implement functions in the method provided in this application, an apparatus or a device provided in this application may include a hardware structure and/or a software module, and the foregoing functions are implemented in a form of a hardware structure, a software module, or a combination of a hardware structure and a software module. Whether a function in the foregoing functions is performed by using the hardware structure, the software module, or the combination of the hardware structure and the software module depends on particular applications and design constraints of the technical solutions. Division into modules in this application is an example, is merely logical function division, and may be other division during actual implementation. In addition, functional modules in embodiments of this application may be integrated into one processor, or may exist alone physically, or two or more modules may be integrated into one module. The integrated module may be implemented in a form of hardware, or may be implemented in a form of a software functional module.

FIG. 9 is a diagram of an apparatus according to this application. The apparatus may include a one-to-one corresponding module for performing the method/operation/step/action described in any one of the embodiments shown in FIG. 2 and FIG. 3. The module may be a hardware circuit or software, or may be implemented by a hardware circuit in combination with software.

The apparatus 900 includes a communication unit 901 and a processing unit 902, configured to implement the method performed by each device in the foregoing embodiments. For example, the apparatus may be referred to as a network quantization apparatus or a communication apparatus.

In a possible implementation, the apparatus is a terminal device, or is located in a terminal device. Specifically, the communication unit 901 is configured to receive a first model and a first KL divergence in $t^{th}$ aggregation from a second device. The first model in the $t^{th}$ aggregation is obtained by the second device by aggregating a plurality of second models in $t^{th}$ update and quantization from a plurality of first devices. The first KL divergence in the $t^{th}$ aggregation represents an average difference between the plurality of second models in the $t^{th}$ update and quantization and the first model in the $t^{th}$ aggregation. t is a positive integer. The processing unit 902 is configured to determine a second model in $(t + 1)^{th}$ update and quantization based on the first model and the first KL divergence in the $t^{th}$ aggregation. The communication unit 901 is further configured to send the second model in the $(t + 1)^{th}$ update and quantization to the second device.

Optionally, that the processing unit 902 is configured to determine the second model in the $(t + 1)^{th}$ update and quantization based on the first model and the first KL divergence in the $t^{th}$ aggregation includes:

determining a third model in $(t + 1)^{th}$ training based on the first model in the $t^{th}$ aggregation and a third model in $t^{th}$ training;
determining a quantization level of the third model in the $(t + 1)^{th}$ training based on the first KL divergence in the $t^{th}$ aggregation; and
determining the second model in the $(t + 1)^{th}$ update and quantization based on the third model in the $(t + 1)^{th}$ training and the quantization level of the third model in the $(t + 1)^{th}$ training.

Optionally, that the processing unit 902 is configured to determine the third model in the $(t + 1)^{th}$ training based on the first model in the $t^{th}$ aggregation and the third model in the $t^{th}$ training includes:

determining an enhanced loss function in the $t^{th}$ training based on one or more of a cross-entropy loss function corresponding to the third model in the $t^{th}$ training, a cross-entropy loss function corresponding to the second model in the $t^{th}$ update and quantization, a radio resource consumed for transmitting the second model in the $t^{th}$ update and quantization, an upper limit of a radio resource allocable to the first device, and a second KL divergence in the $t^{th}$ training, where the second KL divergence in the $t^{th}$ training represents a difference between the third model in the $t^{th}$ training and the first model in the $t^{th}$ aggregation, and/or a difference between the second model obtained in the $t^{th}$ update and quantization and the first model in the $t^{th}$ aggregation; and

training the first model in the $t^{th}$ aggregation based on the enhanced loss function in the $t^{th}$ training, to obtain the third model in the $(t + 1)^{th}$ training.

Optionally, that the processing unit 902 is configured to determine the quantization level of the third model in the $(t + 1)^{th}$ training based on the first KL divergence in the $t^{th}$ aggregation includes:
updating a quantization level of the third model in the $t^{th}$ training based on one or more of the first KL divergence in the $t^{th}$ aggregation, a radio resource consumed for transmitting the second model obtained in the $t^{th}$ update and quantization, and a cross-entropy loss function of the second model obtained in the $t^{th}$ update and quantization, to obtain the quantization level of the third model in the $(t + 1)^{th}$ training.

Optionally, that the processing unit 902 is configured to determine the second model in the $(t + 1)^{th}$ update and quantization based on the third model in the $(t + 1)^{th}$ training and the quantization level of the third model in the $(t + 1)^{th}$ training includes:
quantizing the third model in the $(t + 1)^{th}$ training by using the quantization level of the third model in the $(t + 1)^{th}$ training, to determine the second model in the $(t + 1)^{th}$ update and quantization.

Optionally, that the processing unit 902 is configured to determine the second model in the $(t + 1)^{th}$ update and quantization based on the third model in the $(t + 1)^{th}$ training and the quantization level of the third model in the $(t + 1)^{th}$ training includes:

updating the third model in the $(t + 1)^{th}$ training based on a third KL divergence in the $t^{th}$ update and quantization, to obtain a fourth model in the $(t + 1)^{th}$ training, where the third KL divergence in the $t^{th}$ update and quantization represents a difference between the third model in the $(t + 1)^{th}$ training and the third model in the $t^{th}$ training, and/or a difference between a fourth model in the $(t + 1)^{th}$ update and quantization and the third model in the $t^{th}$ training; and the fourth model in the $(t + 1)^{th}$ update and quantization is a model obtained by quantizing the third model in the $(t + 1)^{th}$ training by using the quantization level of the third model in the $(t + 1)^{th}$ training; and

quantizing the fourth model in the $(t + 1)^{th}$ training by using the quantization level of the third model in the $(t + 1)^{th}$ training, to determine the second model in the $(t + 1)^{th}$ update and quantization.

For specific execution procedures of the communication unit 901 and the processing unit 902 in this implementation, refer to the corresponding description in the foregoing method embodiments. Details are not described herein again. In the network quantization method implemented by the apparatus, global aggregation information/a model (namely, the first model and the first KL divergence) delivered by the second device may be received, and a quantized local model may be updated based on the global aggregation information/the model. Because global knowledge is integrated, the first device can implement faster convergence when updating the quantized local model (namely, the second model), to improve training efficiency. Even if quantization causes a specific accuracy loss, this method still implements good learning performance, can meet an accuracy requirement for a local model, and helps reduce consumption of transmission bandwidth.

In another possible implementation, the apparatus is a network device, or is located in a network device. Specifically, the communication unit 901 is configured to receive a plurality of second models in $t^{th}$ update and quantization from a plurality of first devices, where t is a positive integer. The processing unit 902 is configured to aggregate the plurality of second models in the $t^{th}$ update and quantization, to obtain a first model and a first KL divergence in $t^{th}$ aggregation. The first KL divergence in the $t^{th}$ aggregation represents an average difference between the plurality of second models in the $t^{th}$ update and quantization and the first model in the $t^{th}$ aggregation. The communication unit 901 is further configured to send the first model and the first KL divergence in the $t^{th}$ update and quantization to the plurality of first devices. The first model and the first KL divergence in the $t^{th}$ update and quantization are used by the first device to determine a second model in $(t + 1)^{th}$ update and quantization.

Optionally, that the processing unit 902 is configured to aggregate the plurality of second models in the $t^{th}$ update and quantization, to obtain the first model and the first KL divergence in the $t^{th}$ aggregation includes:

restoring the plurality of second models in the $t^{th}$ update and quantization, to obtain a plurality of sixth models in $t^{th}$ restoration;
aggregating the plurality of sixth models in the $t^{th}$ restoration, to obtain the first model in the $t^{th}$ aggregation; and
calculating the first KL divergence in the $t^{th}$ aggregation based on the first model in the $t^{th}$ aggregation and the plurality of second models in the $t^{th}$ update and quantization.

Optionally, the communication unit 901 is further configured to receive a plurality of second models in the $(t+1)^{th}$ update and quantization from the plurality of first devices. The processing unit 902 is further configured to aggregate the plurality of second models in the $(t+1)^{th}$ update and quantization, to obtain a first model and a first KL divergence in $(t+1)^{th}$ aggregation.

For specific execution procedures of the communication unit 901 and the processing unit 902 in this implementation, refer to the corresponding description in the foregoing method embodiments. Details are not described herein again. In the network quantization method implemented by the apparatus, a quantized local model (namely, the second model) may be received from the first device. Even if quantization causes a specific accuracy loss, this method still implements good learning performance, can meet an accuracy requirement for a local model, and helps reduce consumption of transmission bandwidth. In addition, because global knowledge is integrated, the first device can implement faster convergence when updating the quantized local model, to improve training efficiency.

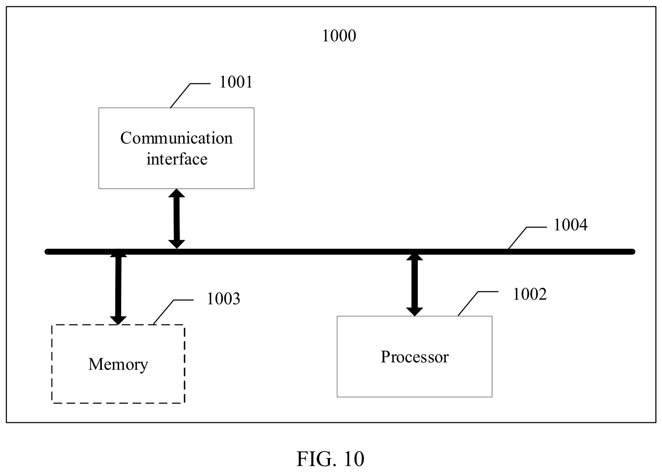

FIG. 10 is a diagram of a device according to this application. The device is configured to implement the network quantization method in the foregoing method embodiments. The device 1000 may be a chip system, or may be the device described in the foregoing method embodiments.

The device 1000 includes a communication interface 1001 and a processor 1002. The communication interface 1001 may be, for example, a transceiver, an interface, a bus, a circuit, or an apparatus that can implement a receiving function and a sending function. The communication interface 1001 is configured to communicate with another device through a transmission medium, so that the device 1000 can communicate with the another device. The processor 1002 is configured to perform a processing-related operation.

In a possible implementation, the device 1000 may be a terminal device, or may be located in a terminal device. Specifically, the communication interface 1001 is configured to receive a first model and a first KL divergence in $t^{th}$ aggregation from a second device. The first model in the $t^{th}$ aggregation is obtained by the second device by aggregating a plurality of second models in $t^{th}$ update and quantization from a plurality of first devices. The first KL divergence in the $t^{th}$ aggregation represents an average difference between the plurality of second models in the $t^{th}$ update and quantization and the first model in the $t^{th}$ aggregation. t is a positive integer. The processor 1002 is configured to determine a second model in $(t+1)^{th}$ update and quantization based on the first model and the first KL divergence in the $t^{th}$ aggregation. The communication interface 1001 is further configured to send the second model in the $(t+1)^{th}$ update and quantization to the second device.

For specific execution procedures of the communication interface 1001 and the processor 1002 in this implementation, refer to the method performed by the communication unit and the processing unit in the embodiment in FIG. 9 and the descriptions in the foregoing method embodiments. Details are not described herein again. In the network quantization method implemented by the device, global aggregation information/a model (namely, the first model and the first KL divergence) delivered by the second device may be received, and a quantized local model may be updated based on the global aggregation information/the model. Because global knowledge is integrated, the first device can implement faster convergence when updating the quantized local model (namely, the second model), to improve training efficiency. Even if quantization causes a specific accuracy loss, this method still implements good learning performance, can meet an accuracy requirement for a local model, and helps reduce consumption of transmission bandwidth.

In another possible implementation, the device 1000 may be a network device, or may be located in a network device. Specifically, the communication interface 1001 is configured to receive a plurality of second models in $t^{th}$ update and quantization from a plurality of first devices, where t is a positive integer. The processor 1002 is configured to aggregate the plurality of second models in the $t^{th}$ update and quantization, to obtain a first model and a first KL divergence in $t^{th}$ aggregation. The first KL divergence in the $t^{th}$ aggregation represents an average difference between the plurality of second models in the $t^{th}$ update and quantization and the first model in the $t^{th}$ aggregation. The communication interface 1001 is further configured to send the first model and the first KL divergence in the $t^{th}$ update and quantization to the plurality of first devices. The first model and the first KL divergence in the $t^{th}$ update and quantization are used by the first device to determine a second model in $(t+1)^{th}$ update and quantization.

For specific execution procedures of the communication interface 1001 and the processor 1002 in this implementation, refer to the method performed by the communication unit and the processing unit in the embodiment in FIG. 9 and the descriptions in the foregoing method embodiments. Details are not described herein again. In the network quantization method implemented by the device, a quantized local model (namely, the second model) may be received from the first device. Even if quantization causes a specific accuracy loss, this method still implements good learning performance, can meet an accuracy requirement for a local model, and helps reduce consumption of transmission bandwidth. In addition, because global knowledge is integrated, the first device can implement faster convergence when updating the quantized local model, to improve training efficiency.

Optionally, the device 1000 may further include at least one memory 1003, configured to store program instructions and/or data. In an implementation, the memory is coupled to the processor. The coupling in this application may be an indirect coupling or a communication connection between apparatuses, units, or modules in an electrical form, a mechanical form, or another form, and is used for information exchange between the apparatuses, the units, or the modules. The processor may perform an operation in collaboration with the memory. The processor may execute the program instructions stored in the memory. The at least one memory and the processor are integrated together.

In this application, a specific connection medium between the communication interface, the processor, and the memory is not limited. For example, the memory, the processor, and the communication interface are connected through a bus. The bus 1004 is represented by a thick line in FIG. 10. A manner of a connection between other components is merely an example for description, and is not construed as a limitation. The bus may be classified as an address bus, a data bus, a control bus, or the like. For ease of representation, only one thick line is for representing the bus in FIG. 10, but this does not mean that there is only one bus or only one type of bus.

In this application, the processor may be a general-purpose processor, a digital signal processor, an application-specific integrated circuit, a field programmable gate array or another programmable logic device, a discrete gate or transistor logic device, or a discrete hardware component, and may implement or perform methods, steps, and logical block diagrams that are disclosed in this application. The general-purpose processor may be a microprocessor, any conventional processor, or the like. The steps in the methods disclosed with reference to this application may be directly performed and completed by a hardware processor, or may be performed and completed by using a combination of hardware in the processor and a software module.

In this application, the memory may be a non-volatile memory, for example, a hard disk drive (hard disk drive, HDD) or a solid-state disk (solid-state drive, SSD), or may be a volatile memory (volatile memory), for example, a random access memory (random-access memory, RAM). The memory is any other medium that can carry or store expected program code in a form of an instruction or a data structure and that can be accessed by a computer, but is not limited thereto. Alternatively, the memory in this application may be a circuit or any other apparatus that can implement a storage function, and is configured to store program instructions and/or data.

This application provides another device. The device includes a processor. The processor is coupled to a memory. The processor is configured to read and execute computer instructions stored in the memory, to implement the network quantization method in any one of the embodiments shown in FIG. 2 and FIG. 3.

This application provides a communication system. The communication system includes the network device and the terminal device in any one of the embodiments shown in FIG. 2 and FIG. 3.

This application provides a computer-readable storage medium. The computer-readable storage medium stores a program or instructions. When the program or instructions are run on a computer, the computer is enabled to perform the network quantization method in any one of the embodiments shown in FIG. 2 and FIG. 3.

This application provides a computer program product. The computer program product includes instructions. When the instructions are run on a computer, the computer is enabled to perform the network quantization method in any one of the embodiments shown in FIG. 2 and FIG. 3.

This application provides a chip or a chip system. The chip or the chip system includes at least one processor and an interface. The interface and the at least one processor are interconnected through a line. The at least one processor is configured to run a computer program or instructions, to perform the network quantization method in any one of the embodiments shown in FIG. 2 and FIG. 3.

The interface in the chip may be an input/output interface, a pin, a circuit, or the like.

The chip system may be a system on chip (system on chip, SOC), a baseband chip, or the like. The baseband chip may include a processor, a channel encoder, a digital signal processor, a modem, an interface module, and the like.

In an implementation, the chip or the chip system described above in this application further includes at least one memory. The at least one memory stores instructions. The memory may be a storage unit inside the chip, for example, a register or a cache, or may be a storage unit (for example, a read-only memory or a random access memory) of the chip.

All or some of the technical solutions provided in this application may be implemented by using software, hardware, firmware, or any combination thereof. When software is used to implement the technical solutions, all or some of the technical solutions may be implemented in a form of a computer program product. The computer program product includes one or more computer instructions. When the computer program instructions are loaded and executed on a computer, the procedure or functions according to this application are all or partially generated. The computer may be a general-purpose computer, a dedicated computer, a computer network, a network device, a terminal device, or another programmable apparatus. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk, or a magnetic tape), an optical medium (for example, a digital video disc (digital video disc, DVD)), a semiconductor medium, or the like.

In this application, on the premise of no logical contradiction, embodiments may be mutually referenced. For example, methods and/or terms may be mutually referenced between method embodiments. For example, functions and/or terms may be mutually referenced between apparatus embodiments. For example, functions and/or terms may be mutually referenced between an apparatus embodiment and a method embodiment.

It is clear that a person skilled in the art can make various modifications and variations to this application without departing from the scope of this application. This application is intended to cover these modifications and variations of this application provided that they fall within the protection scope defined by the following claims and their equivalent technologies.

## Claims

1. A network quantization method, comprising:

    receiving, by a first device, a first model and a first KL divergence in $t^{th}$ aggregation from a second device; wherein the first model in the $t^{th}$ aggregation is obtained by the second device by aggregating a plurality of second models in $t^{th}$ update and quantization from a plurality of first devices, the first KL divergence in the $t^{th}$ aggregation represents an average difference between the plurality of second models in the $t^{th}$ update and quantization and the first model in the $t^{th}$ aggregation, and t is a positive integer;
    determining, by the first device, a second model in $(t + 1)^{th}$ update and quantization based on the first model and the first KL divergence in the $t^{th}$ aggregation; and
    sending, by the first device, the second model in the $(t + 1)^{th}$ update and quantization to the second device.

2. The method according to claim 1, wherein determining, by the first device, the second model in the $(t + 1)^{th}$ update and quantization based on the first model and the first KL divergence in the $t^{th}$ aggregation comprises:

    determining a third model in $(t + 1)^{th}$ training based on the first model in the $t^{th}$ aggregation and a third model in $t^{th}$ training;
    determining a quantization level of the third model in the $(t + 1)^{th}$ training based on the first KL divergence in the $t^{th}$ aggregation; and
    determining the second model in the $(t + 1)^{th}$ update and quantization based on the third model in the $(t + 1)^{th}$ training and the quantization level of the third model in the $(t + 1)^{th}$ training.

3. The method according to claim 2, wherein determining the third model in the $(t + 1)^{th}$ training based on the first model in the $t^{th}$ aggregation and the third model in the $t^{th}$ training comprises:

    determining an enhanced loss function in the $t^{th}$ training based on one or more of a cross-entropy loss function corresponding to the third model in the $t^{th}$ training, a cross-entropy loss function corresponding to the second model in the $t^{th}$ update and quantization, a radio resource consumed for transmitting the second model in the $t^{th}$ update and quantization, an upper limit of a radio resource allocable to the first device, and a second KL divergence in the $t^{th}$ training, wherein the second KL divergence in the $t^{th}$ training represents a difference between the third model in the $t^{th}$ training and the first model in the $t^{th}$ aggregation, and/or a difference between the second model obtained in the $t^{th}$ update and quantization and the first model in the $t^{th}$ aggregation; and
    training the first model in the $t^{th}$ aggregation based on the enhanced loss function in the $t^{th}$ training, to obtain the third model in the $(t + 1)^{th}$ training.

4. The method according to claim 2, wherein determining the quantization level of the third model in the $(t + 1)^{th}$ training based on the first KL divergence in the $t^{th}$ aggregation comprises:
updating a quantization level of the third model in the $t^{th}$ training based on one or more of the first KL divergence in the $t^{th}$ aggregation, a radio resource consumed for transmitting the second model obtained in the $t^{th}$ update and quantization, and a cross-entropy loss function of the second model obtained in the $t^{th}$ update and quantization, to obtain the quantization level of the third model in the $(t + 1)^{th}$ training.

5. The method according to any one of claims 2 to 4, wherein determining the second model in the $(t + 1)^{th}$ update and quantization based on the third model in the $(t + 1)^{th}$ training and the quantization level of the third model in the $(t + 1)^{th}$ training comprises:
quantizing the third model in the $(t + 1)^{th}$ training by using the quantization level of the third model in the $(t + 1)^{th}$ training, to determine the second model in the $(t + 1)^{th}$ update and quantization.

**6.** The method according to claim 5, wherein quantizing the third model in the $(t + 1)^{th}$ training by using the quantization level of the third model in the $(t + 1)^{th}$ training, to determine the second model in the $(t + 1)^{th}$ update and quantization comprises:

updating the third model in the $(t + 1)^{th}$ training based on a third KL divergence in the $t^{th}$ update and quantization, to obtain a fourth model in the $(t + 1)^{th}$ training, wherein the third KL divergence in the $t^{th}$ update and quantization represents a difference between the third model in the $(t + 1)^{th}$ training and the third model in the $t^{th}$ training, and/or a difference between a fourth model in the $(t + 1)^{th}$ update and quantization and the third model in the $t^{th}$ training; and the fourth model in the $(t + 1)^{th}$ update and quantization is a model obtained by quantizing the third model in the $(t + 1)^{th}$ training by using the quantization level of the third model in the $(t + 1)^{th}$ training; and quantizing the fourth model in the $(t + 1)^{th}$ training by using the quantization level of the third model in the $(t + 1)^{th}$ training, to determine the second model in the $(t + 1)^{th}$ update and quantization.

**7.** A network quantization method, comprising:

receiving, by a second device, a plurality of second models in $t^{th}$ update and quantization from a plurality of first devices, wherein t is a positive integer; aggregating, by the second device, the plurality of second models in the $t^{th}$ update and quantization, to obtain a first model and a first KL divergence in $t^{th}$ aggregation, wherein the first KL divergence in the $t^{th}$ aggregation represents an average difference between the plurality of second models in the $t^{th}$ update and quantization and the first model in the $t^{th}$ aggregation; and sending, by the second device, the first model and the first KL divergence in the $t^{th}$ update and quantization to the plurality of first devices, wherein the first model and the first KL divergence in the $t^{th}$ update and quantization are used by the first device to determine a second model in $(t + 1)^{th}$ update and quantization.

**8.** The method according to claim 7, wherein aggregating, by the second device, the plurality of second models in the $t^{th}$ update and quantization, to obtain the first model and the first KL divergence in the $t^{th}$ aggregation comprises:

restoring the plurality of second models in the $t^{th}$ update and quantization, to obtain a plurality of sixth models in $t^{th}$ restoration; aggregating the plurality of sixth models in the $t^{th}$ restoration, to obtain the first model in the $t^{th}$ aggregation; and calculating the first KL divergence in the $t^{th}$ aggregation based on the first model in the $t^{th}$ aggregation and the plurality of second models in the $t^{th}$ update and quantization.

**9.** The method according to claim 7 or 8, wherein the method further comprises:

receiving, by the second device, a plurality of second models in the $(t + 1)^{th}$ update and quantization from the plurality of first devices; and aggregating, by the second device, the plurality of second models in the $(t + 1)^{th}$ update and quantization, to obtain a first model and a first KL divergence in $(t + 1)^{th}$ aggregation.

**10.** A network quantization apparatus, comprising:

a communication unit, configured to receive a first model and a first KL divergence in $t^{th}$ aggregation from a second device; wherein the first model in the $t^{th}$ aggregation is obtained by the second device by aggregating a plurality of second models in $t^{th}$ update and quantization from a plurality of first devices, the first KL divergence in the $t^{th}$ aggregation represents an average difference between the plurality of second models in the $t^{th}$ update and quantization and the first model in the $t^{th}$ aggregation, and t is a positive integer; and a processing unit, configured to determine a second model in $(t + 1)^{th}$ update and quantization based on the first model and the first KL divergence in the $t^{th}$ aggregation; wherein the communication unit is further configured to send the second model in the $(t + 1)^{th}$ update and quantization to the second device.

**11.** The apparatus according to claim 10, wherein that the processing unit is configured to determine the second model in the $(t + 1)^{th}$ update and quantization based on the first model and the first KL divergence in the $t^{th}$ aggregation comprises:

determining a third model in $(t+1)^{th}$ training based on the first model in the $t^{th}$ aggregation and a third model in $t^{th}$ training;

determining a quantization level of the third model in the $(t+1)^{th}$ training based on the first KL divergence in the $t^{th}$ aggregation; and

determining the second model in the $(t+1)^{th}$ update and quantization based on the third model in the $(t+1)^{th}$ training and the quantization level of the third model in the $(t+1)^{th}$ training.

12. The apparatus according to claim 11, wherein that the processing unit is configured to determine the third model in the $(t+1)^{th}$ training based on the first model in the $t^{th}$ aggregation and the third model in the $t^{th}$ training comprises:

determining an enhanced loss function in the $t^{th}$ training based on one or more of a cross-entropy loss function corresponding to the third model in the $t^{th}$ training, a cross-entropy loss function corresponding to the second model in the $t^{th}$ update and quantization, a radio resource consumed for transmitting the second model in the $t^{th}$ update and quantization, an upper limit of a radio resource allocable to the first device, and a second KL divergence, wherein the second KL divergence represents a difference between the third model in the $t^{th}$ training and the first model in the $t^{th}$ aggregation, and/or a difference between the second model obtained in the $t^{th}$ update and quantization and the first model in the $t^{th}$ aggregation; and

training the first model in the $t^{th}$ aggregation based on the enhanced loss function in the $t^{th}$ training, to obtain the third model in the $(t+1)^{th}$ training.

13. The apparatus according to claim 11, wherein that the processing unit is configured to determine the quantization level of the third model in the $(t+1)^{th}$ training based on the first KL divergence in the $t^{th}$ aggregation comprises:
updating a quantization level of the third model in the $t^{th}$ training based on one or more of the first KL divergence, a radio resource consumed for transmitting the second model obtained in the $t^{th}$ update and quantization, and a cross-entropy loss function of the second model obtained in the $t^{th}$ update and quantization, to obtain the quantization level of the third model in the $(t+1)^{th}$ training.

14. The apparatus according to any one of claims 11 to 13, wherein that the processing unit is configured to determine the second model in the $(t+1)^{th}$ update and quantization based on the third model in the $(t+1)^{th}$ training and the quantization level of the third model in the $(t+1)^{th}$ training comprises:
quantizing the third model in the $(t+1)^{th}$ training by using the quantization level of the third model in the $(t+1)^{th}$ training, to determine the second model in the $(t+1)^{th}$ update and quantization.

15. The apparatus according to claim 14, wherein that the processing unit is configured to quantize the third model in the $(t+1)^{th}$ training by using the quantization level of the third model in the $(t+1)^{th}$ training, to determine the second model in the $(t+1)^{th}$ update and quantization comprises:

updating the third model in the $(t+1)^{th}$ training based on a third KL divergence, to obtain a fourth model in the $(t+1)^{th}$ training, wherein the third KL divergence represents a difference between the third model in the $(t+1)^{th}$ training and the third model in the $t^{th}$ training, and/or a difference between a fourth model in the $(t+1)^{th}$ update and quantization and the third model in the $t^{th}$ training; and the fourth model in the $(t+1)^{th}$ update and quantization is a model obtained by quantizing the third model in the $(t+1)^{th}$ training by using the quantization level of the third model in the $(t+1)^{th}$ training; and

quantizing the fourth model in the $(t+1)^{th}$ training by using the quantization level of the third model in the $(t+1)^{th}$ training, to determine the second model in the $(t+1)^{th}$ update and quantization.

16. A network quantization apparatus, comprising:

a communication unit, configured to receive a plurality of second models in $t^{th}$ update and quantization from a plurality of first devices, wherein t is a positive integer; and

a processing unit, configured to aggregate the plurality of second models in the $t^{th}$ update and quantization, to obtain a first model and a first KL divergence in $t^{th}$ aggregation, wherein the first KL divergence in the $t^{th}$ aggregation represents an average difference between the plurality of second models in the $t^{th}$ update and quantization and the first model in the $t^{th}$ aggregation; wherein

the communication unit is further configured to send the first model and the first KL divergence in the $t^{th}$ update and quantization to the plurality of first devices, wherein the first model and the first KL divergence in the $t^{th}$ update and quantization are used by the first device to determine a second model in $(t+1)^{th}$ update and quantization.

17. The apparatus according to claim 16, wherein that the processing unit is configured to aggregate the plurality of second models in the $t^{th}$ update and quantization, to obtain the first model and the first KL divergence in the $t^{th}$ aggregation comprises:

restoring the plurality of second models in the $t^{th}$ update and quantization, to obtain a plurality of sixth models in $t^{th}$ restoration;
aggregating the plurality of sixth models in the $t^{th}$ restoration, to obtain the first model in the $t^{th}$ aggregation; and
calculating the first KL divergence in the $t^{th}$ aggregation based on the first model in the $t^{th}$ aggregation and the plurality of second models in the $t^{th}$ update and quantization.

18. The apparatus according to claim 16 or 17, wherein

the communication unit is further configured to receive a plurality of second models in the $(t + 1)^{th}$ update and quantization from the plurality of first devices; and
the processing unit is further configured to aggregate the plurality of second models in the $(t + 1)^{th}$ update and quantization, to obtain a first model and a first KL divergence in $(t + 1)^{th}$ aggregation.

19. A terminal device, comprising a processor and a memory, wherein the memory is configured to store instructions, and when the instructions are executed by the processor, the network device is enabled to perform the method according to any one of claims 1 to 6.

20. A network device, comprising a processor and a memory, wherein the memory is configured to store instructions, and when the instructions are executed by the processor, the terminal device is enabled to perform the method according to any one of claims 7 to 9.

21. A communication system, comprising a terminal device and a network device, wherein the terminal device performs the method according to any one of claims 1 to 6, and the network device performs the method according to any one of claims 7 to 9.

22. A computer-readable storage medium, wherein the computer-readable storage medium stores instructions, and when the instructions are run on a computer, the computer is enabled to perform the method according to any one of claims 1 to 9.

23. A chip system, wherein the chip system comprises a processor, a memory, and an interface, and the processor and the interface are configured to perform the method according to any one of claims 1 to 9.

24. A computer program product, comprising instructions, wherein when the instructions are run on a computer, the computer is enabled to perform the method according to any one of claims 1 to 9.

FIG. 1

FIG. 2

First device

Second device

S101: The second device sends a first model and a first KL divergence in $t^{th}$ aggregation to the first device

S102: The first device determines a second model in $(t + 1)^{th}$ update and quantization based on the first model and the first KL divergence in the $t^{th}$ aggregation

S103: The first device sends the second model in the $(t + 1)^{th}$ update and quantization to the second device

FIG. 3

MNIST dataset

Training accuracy (%)

Quantity of iterations

Cluster: cluster
GCFL: collaborative learning solution without quantization
FL8Q: collaborative learning solution with 8-bit quantization
AQeD: network quantization method provided in this application

FIG. 4

CIFAR-10 dataset

Cluster: cluster
GCFL: collaborative learning solution without quantization
FL8Q: collaborative learning solution with 8-bit quantization
AQeD: network quantization method provided in this application

FIG. 5

Total bandwidth consumption and quantity of user equipments

GCFL: collaborative learning solution without quantization
FL8Q: collaborative learning solution with 8-bit quantization
AQeD: network quantization method provided in this application
MNIST dataset
CIFAR-10 dataset

FIG. 6

MNIST dataset

GCFL: collaborative learning solution without quantization
FL8Q: collaborative learning solution with 8-bit quantization
AQeD: network quantization method provided in this application

FIG. 7

CIFAR-10 dataset

GCFL: collaborative learning solution without quantization
FL8Q: collaborative learning solution with 8-bit quantization
AQeD: network quantization method provided in this application

FIG. 8

FIG. 9

1000

1001

Communication
interface

1004

1003

Memory

1002

Processor

FIG. 10

## INTERNATIONAL SEARCH REPORT

| | International application No. |
|---|---|
| | **PCT/CN2023/073095** |

### A. CLASSIFICATION OF SUBJECT MATTER

H04L41/16(2022.01)i

According to International Patent Classification (IPC) or to both national classification and IPC

### B. FIELDS SEARCHED

Minimum documentation searched (classification system followed by classification symbols)

IPC:H04L,H04W

Documentation searched other than minimum documentation to the extent that such documents are included in the fields searched

Electronic data base consulted during the international search (name of data base and, where practicable, search terms used)

CNABS, CNTXT, VEN, ENTXTC, CNKI: 联邦, 学习, 训练, 分布式, 量化, 模型, 参数, 梯度, 散度, 更新, 聚合, 本地, 局部, 全局, 差异, 损失函数, federal, learn+, train+, distribut+, quantif+, model, parameter?, gradient, diversit+, updat+, aggregat+, local, global, differen+, loss 1w function.

### C. DOCUMENTS CONSIDERED TO BE RELEVANT

| Category* | Citation of document, with indication, where appropriate, of the relevant passages | Relevant to claim No. |
|---|---|---|
| X | 李宜柄 (LI, Yibing). "联邦学习中针对客户端异构性的模型参数更新优化方法 (Model Update Optimization Forheterogeneous Clients Infederated Learning)" 哈尔滨工业大学 (HARBIN INSTITUTE OF TECHNOLOGY), 15 March 2022 (2022-03-15), sections 4.2-4.4 | 1-24 |
| A | CN 113971090 A (NATIONAL UNIVERSITY OF DEFENSE TECHNOLOGY OF PLA) 25 January 2022 (2022-01-25) entire document | 1-24 |
| A | CN 113011602 A (UNIVERSITY OF SCIENCE AND TECHNOLOGY OF CHINA, SUZHOU INSTITUTE FOR ADVANCED RESEARCH) 22 June 2021 (2021-06-22) entire document | 1-24 |
| A | CN 113139662 A (SHENZHEN RESEARCH INSTITUTE OF BIG DATA et al.) 20 July 2021 (2021-07-20) entire document | 1-24 |
| A | CN 114386570 A (SUN YAT-SEN UNIVERSITY) 22 April 2022 (2022-04-22) entire document | 1-24 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **08 October 2023** | **09 October 2023** |

| Name and mailing address of the ISA/CN | Authorized officer |
|---|---|
| **China National Intellectual Property Administration (ISA/CN)** **China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**

| International application No. |
| --- |
| **PCT/CN2023/073095** |

| C. | DOCUMENTS CONSIDERED TO BE RELEVANT | |
| --- | --- | --- |
| Category* | Citation of document, with indication, where appropriate, of the relevant passages | Relevant to claim No. |
| | WO 2022104799 A1 (BEIJING XIAOMI MOBILE SOFTWARE CO., LTD.; BEIJING UNIVERSITY OF POSTS AND TELECOMMUNICATIONS) 27 May 2022 (2022-05-27) | |

Form PCT/ISA/210 (second sheet) (July 2022)

**INTERNATIONAL SEARCH REPORT**
Information on patent family members

International application No.

**PCT/CN2023/073095**

| Patent document cited in search report | | | Publication date (day/month/year) | Patent family member(s) | Publication date (day/month/year) |
|---|---|---|---|---|---|
| CN | 113971090 | A | 25 January 2022 | None | |
| CN | 113011602 | A | 22 June 2021 | None | |
| CN | 113139662 | A | 20 July 2021 | None | |
| CN | 114386570 | A | 22 April 2022 | None | |
| WO | 2022104799 | A1 | 27 May 2022 | None | |

Form PCT/ISA/210 (patent family annex) (July 2022)